# EUROPEAN PATENT APPLICATION

(11) **EP 4 387 240 A1**
(43) Date of publication of application: **19.06.2024**
(21) Application number: 23217330.2
(22) Date of filing: 15.12.2023
(51) Int. Cl.: H04N 21/234, H04N 21/2343, H04N 21/262, H04N 21/2668, H04N 21/81, H04N 21/845

(54) **TIERED MANIFEST MANIPULATION AND PRE-RENDERING WORKFLOW**

(30) Priority: 16.12.2022 US 202263387728 P; 01.12.2023 US 202318526246
(71) Applicant: NBCUniversal Media, LLC, New York, NY 10112 (US)
(72) Inventor: MCGILVRAY, Grant, New York, 10112 (US); HARRELL, Michael, New York, 10112 (US); ABRAHAM, Anil, New York, 10112 (US)
(74) Representative: Keltie LLP

(57) **Abstract**

Embodiments provided herein provide tiered manifest génération, tiered manifest distribution and/or both. This may result in efficient content distribution. Specifically, portions of a first manifest are used in a second manifest, enabling segment reuse. This may result in efficient encoding, storage, and provision of content in a content distribution workflow.

## Description

### CROSS-REFERENCE TO RELATED APPLICATION

This application claims priority from and the benefit of U.S. Provisional Patent Application Serial No. 63/387,728, entitled "TIERED MANIFEST MANIPULATION AND PRE-RENDERING WORKFLOW", filed December 16, 2022, which is hereby incorporated by reference.

### BACKGROUND

The present disclosure relates generally to improved systems and techniques for efficient content distribution. More specifically, the present disclosure relates to tiered or cascading manifest manipulation and pre-rendering workflows that result in reduced content processing and content storage requirements, resulting in, among other things, increased processing, storage, and monetary efficiencies in content distribution.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Traditional content network distribution involved linear television distribution where content files were played live and centrally so that the output could be distributed to individual stations. Stations, in turn, traditionally integrate this linear video with additional local video to create a local television broadcast. However, as the network distribution paradigm continues to shift, migrating from the linear television distribution paradigm to a cloud distribution paradigm, a need exists to develop new non-linear manifest-manipulated techniques for content distribution. In the cloud distribution paradigm, a manifest (or a playlist) is delivered to a user device, allowing the user device to receive chunks or fragments of encoded content and then decode and play the content.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the subject matter may encompass a variety of forms that may be similar to or different from the embodiments set forth below.

Embodiments provided herein provide tiered manifest generation and/or distribution for efficient content provision. Specifically, portions of a first manifest are used in a second manifest, enabling segment reuse. This may result in efficient encoding, storage, and provision of content in a content distribution workflow.

According to at least one aspect of the present invention, there is provided a computer-implemented method for tiered manifest manipulation. The method comprises receiving a first manifest associated with first content and a second manifest associated with second content, generating a first tier manifest comprising an indication of first tier segments describing a playback schedule of the first content and the second content, the first tier manifest comprising a composite of the first manifest and the second manifest that indicates first segments of the first content and second segments of the second content, and providing the first tier manifest to enable generation of a second tier manifest, wherein the second tier manifest is generated based on the first tier manifest and a station manifest.

In some embodiments of this aspect, the first tier manifest indicates first tier segments of first tier encoded and packaged content and the station manifest indicates segments of station-specific content without an indication of the first tier segments.

In further embodiments of this aspect the first tier manifest indicates first tier segments of first tier encoded and packaged content and the station manifest indicates segments of station-specific content without an indication of the first tier segments, and the method further comprises receiving the station manifest, generating the second tier manifest based on the first tier manifest and the received station manifest, and causing provision of the first tier segments and segments of station-specific content to a MVPD, an OTT platform, or both, using the second tier manifest. In such embodiments, the method may further comprise causing the provision of the first tier segments and the station-specific content segments to the MVPD, the OTT platform, or both by providing the second tier manifest to the MVPD, the OTT platform, or both, to instruct the MVPD, the OTT platform how to acquire the first tier segments and the station-specific content segments. Alternatively in such embodiments, the method may further comprise causing the provision of the first tier segments and the station-specific content segments to the MVPD, the OTT platform , or both by generating and providing, to the MVPD, the OTT platform, or both, a transport stream based upon second tier manifest, wherein the transport stream comprises the first tier segments and the station-specific content segments.

In yet further embodiments of this aspect the first tier manifest indicates first tier segments of first tier encoded and packaged content and the station manifest indicates segments of station-specific content without an indication of the first tier segments, and the method further comprises receiving the station manifest, generating the second tier manifest based on the first tier manifest and the received station manifest, causing provision of the first tier segments and segments of station-specific content to a MVPD, an OTT platform, or both, using the second tier manifest, and generating the second tier manifest by inserting indications of content segments from the received station manifest into empty slots of programming segments indicated by the first tier manifest.

In some embodiments of this aspect the first tier manifest indicates first tier segments of first tier encoded and packaged content and the station manifest indicates segments of station-specific content without an indication of the first tier segments, and the method further comprises receiving the station manifest, generating the second tier manifest based on the first tier manifest and the received station manifest, causing provision of the first tier segments and segments of station-specific content to a MVPD, an OTT platform, or both, using the second tier manifest, and generating the station manifest, by encoding and packaging station-specific content obtained via a station playout into station-specific content segments, and populating the station manifest with an indication of the station-specific content segments and associated timings.

In further embodiments of this aspect the first tier manifest indicates first tier segments of first tier encoded and packaged content and the station manifest indicates segments of station-specific content without an indication of the first tier segments, and the method further comprises receiving the station manifest, generating the second tier manifest based on the first tier manifest and the received station manifest, causing provision of the first tier segments and segments of station-specific content to a MVPD, an OTT platform, or both, using the second tier manifest, receiving an ad manifest, and generating a third tier manifest based on the second tier manifest and the received ad manifest, wherein the third tier manifest enables dynamic ad insertion. In such embodiments, the third tier manifest may be generated specifically as a customization for a particular distribution channel.

In some embodiments of this aspect, the first manifest comprises an indication of segments of the first content, the first content comprising live video content, and the second manifest comprises an indication of segments of the second content, the second content comprising a file video.

In further embodiments of this aspect, the method further comprises generating a plurality of second tier manifests, each providing a different schedule, selection, or schedule and selection of the first segments and second segments in conjunction with associated second tier content. In such embodiments, the plurality of second tier manifests may comprise a corresponding second tier manifest for each of a plurality of stations that use at least a portion of the first segments, at least a portion of the second segments, or both.

In yet further embodiments of this aspect, the method further comprises inserting a graphic into at least a portion of the first segments, at least a portion of the second segments, or both, by identifying within the first tier manifest, a graphical insertion opportunity, generating alternative segments to original segments occurring within the graphical insertion opportunity, the alternative segments comprising the original segments modified to include the graphic, and adjusting subsequent playback to include the alternative segments by modifying the first tier manifest to indicate the alternative segments in lieu of the original segments, or replacing the original segments with the alternative segments.

According to a second aspect of the present invention, there is provided a tangible, non-transitory, computer-readable medium, comprising computer-readable instructions that, when executed by one or more processors of one or more computers, cause the one or more computers to receive a first manifest associated with first content and a second manifest associated with second content, generate a first tier manifest comprising an indication of first tier segments describing a playback schedule of the first content and the second content, the first tier manifest comprising a composite of the first manifest and the second manifest that indicates first segments of the first content and second segments of the second content and provide the first tier manifest to enable generation of a second tier manifest, wherein the second tier manifest is generated based on the first tier manifest and a station manifest. It is to be appreciated that where applicable, this aspect of the invention may be combined with any of the modifications described above with respect to the first aspect of the invention.

In some embodiments of this aspect, the medium comprises computer-readable instructions that, when executed by one or more processors of one or more computers, cause the one or more computers to receive the station manifest, generate the second tier manifest based on the first tier manifest and the received station manifest, and cause provision of the first tier segments and segments of station-specific content to a multichannel video programming distributor (MVPD), an over-the-top (OTT) platform, or both, using the second tier manifest, by providing the second tier manifest to the MVPD, the OTT platform, or both, to instruct the MVPD, the OTT platform, or both, how to acquire the first tier segments and the segments of station-specific content, or generating and providing, to the MVPD, the OTT platform, or both, a transport stream based upon second tier manifest, wherein the transport stream comprises the first tier segments and the segments of station-specific content.

In further aspects of this embodiment, the medium comprises computer-readable instructions that, when executed by one or more processors of one or more computers, cause the one or more computers to receive a third manifest, comprising an indication of customized content for a particular distribution channel, generate a third tier manifest specific to the particular distribution channel, based on the second tier manifest and the received third manifest, wherein the third tier manifest enables dynamic ad insertion, and cause provision of content associated with the third tier manifest to the particular distribution channel.

In yet further aspects of this embodiment, the medium comprises computer-readable instructions that, when executed by one or more processors of one or more computers, cause the one or more computers to insert a graphic into at least a portion of the first segments, at least a portion of the second segments, or both, by identifying within the first tier manifest, a graphical insertion opportunity, generating alternative segments to original segments occurring within the graphical insertion opportunity, the alternative segments comprising the original segments modified to include the graphic, and adjusting subsequent playback to include the alternative segments by modifying the first tier manifest to indicate the alternative segments in lieu of the original segments, or replacing the original segments with the alternative segments.

According to a third aspect of the present invention, a content distribution system is provided. The system comprises a first encoder and packager configured to encode, package, and cause storage of first segments of first content, and generate a first manifest providing an indication of the first segments, a second encoder and packager configured to encode, package, and cause storage of second segments of second content, and generate a second manifest providing an indication of the second segments, and a manifest manipulation service configured to generate a first tier manifest comprising first tier content segments and describing a playback schedule of the first content and the second content, by combining the first manifest and the second manifest, and provide the first tier manifest to enable generation of a second tier manifest, wherein the second tier manifest is generated based on the first tier manifest and a station manifest comprising an indication of station-specific content segments. It is to be appreciated that where applicable, this aspect of the invention may be combined with any of the modifications described above with respect to the first and second aspects of the invention.

In some embodiments of this aspect, the manifest manipulation service is configured to receive the station manifest, generate the second tier manifest by combining the first tier manifest and the station manifest, and cause provision of the first tier segments and the station-specific content segments to a multichannel video programming distributor (MVPD), an over-the-top (OTT) platform, or both, using the second tier manifest, by providing the second tier manifest to the MVPD, the OTT platform, or both, to instruct the MVPD, the OTT platform, or both, how to acquire the first tier segments and the station-specific content segments, or generating and providing, to the MVPD, the OTT platform, or both, a transport stream based upon second tier manifest, wherein the transport stream comprises the first tier segments and the station-specific content segments. In such embodiments, the manifest manipulation service may be configured to generate a cable split manifest customized for a particular cable distribution channel, by receiving a custom ad manifest comprising an indication of custom content segments to be played via the particular cable distribution channel, and merging the custom ad manifest with the second tier manifest, and cause provision of the first tier segments, the station-specific content segments, and the custom content segments to the particular cable distribution channel.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a diagram, illustrating a system for tiered manifest distribution, in accordance with certain aspects of the current application;
FIGS. 2A and 2B (collectively referred to as "FIG. 2") are diagrams of a tiered manifest manipulation approach for content distribution of a linear broadcast, in accordance with certain aspects of the current application;
FIG. 3 is a flowchart, illustrating a process for implementing tiered manifest distribution, in accordance with certain aspects of the current application; and
FIG. 4 is a diagram, illustrating a pre-rendering workflow to accommodate for scheduled network graphics on top of primary content assets;
FIG. 5 is a flowchart, illustrating a process for inserting graphics via tiered manifest distribution, in accordance with certain aspects of the current application;
FIG. 6 is a diagram, illustrating encoding efficiencies and video quality optimizations enabled by tiered manifest manipulations, in accordance with certain aspects of the current application; and
FIG. 7 is a diagram, illustrating storage efficiencies of the tiered manifest distribution of FIG. 1, in accordance with certain aspects of the current application.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

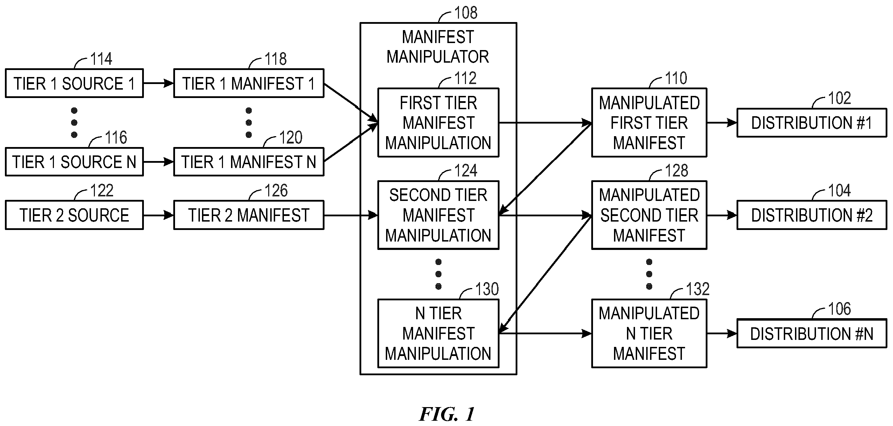

FIG. 1 is a diagram, illustrating a system 100 for tiered manifest distribution, in accordance with certain aspects of the current application. As used herein, "tiered manifest distribution" refers to distribution of digital content via tiered manifests generated by building manifests from other manifests (referred to herein as "tiered manifest manipulation(s)").

As illustrated in FIG. 1, the system 100 provides multiple tiers of distribution of content (e.g., first distribution 102, second distribution 104, and additional distribution(s) 106) by tiered manifest distribution. For example, in the illustrated embodiment, a manifest manipulator 108 (e.g., a service running on a processor-based computing system) may generate and distribute tiered manifests ("manipulated manifests") that, in effect, result in the tiered distribution of content. For example, as illustrated, first distribution 102 may be provided via distribution of a manipulated first tier manifest 110. The manipulated first tier manifest 110 may be generated by a first tier manifest manipulation 112. As discussed herein, the manifest manipulations provided by the manifest manipulator 108 may generate new manifest outputs based upon one or more manifest inputs. In the illustrated embodiment, the first tier manifest manipulation 112 is used to merge content from multiple first tier content sources (First Tier Source 1114 through First Tier Source N 116). The first tier content sources may provide associated manifests that define playback parameters of their content. For example, here, First Tier Source 1 provides First Tier Manifest 1 118, defining playback parameters for content provided by First Tier Source 1114 and First Tier Source N provides First Tier Manifest N 120, defining playback parameters for content provided by First Tier Source N 116.

Among other things, the manifests described herein that are provided by the content sources may provide segment indications of the associated content, such as a location indication of the associated content segments and playback timings for these segments. For example, the location indication may point to the associated content segments in a datastore (e.g., a Content Distribution Network (CDN)) where the content sources have stored the content.

To generate the manipulated first tier manifest 110, the manifest manipulator 108 may merge content indicated in the first tier manifests provided by the content sources. Specifically, the manifest manipulator 108 may combine segment indications from First Tier Manifest 1 118 and First Tier Manifest N 120, with playback timings specific to first distribution 102. To determine how to merge the first tier content source manifests, the manifest manipulator 108 may access a scheduling service that provides a schedule for the first distribution 102, which may include an indication of which subsets of first tier content should be included in the first distribution 102 and positions (e.g., timings) of the subsets of first tier content within the first distribution 102. The manifest manipulator 108 may merge the first tier content source manifests in accordance with this schedule, resulting in the manipulated first tier manifest 110.

In some embodiments, the manipulated first tier manifest 110 may include blocks of timings where second tier content (e.g., provided by a second tier content source 122) may be inserted into the playback schedule. The manifest manipulator 108 may be used to add this second tier content via a second tier manifest manipulation 124. To perform the second tier manifest manipulation 124, the manifest manipulator 108 may receive a second tier manifest 126 defining the playback parameters of the second tier content. Further, the manifest manipulator 108 may receive a scheduling indication that indicates where the second tier content should be inserted for the second distribution 104. The manifest manipulator 108 may generate a manipulated second tier manifest 128 by altering the manipulated first tier manifest 110 to insert the second tier content indicated by the second tier manifest 126.

In some instances, the manifest manipulator 108 may perform manifest manipulations that do not insert additional content. For example, as illustrated by the N tier manifest manipulation 130, the manifest manipulator 108 may, in some cases, generate a new manipulated manifest (e.g., here, manipulated N tier manifest 132) by altering a manifest (e.g., here, manipulated second tier manifest 128) without receiving an additional manifest associated with additional content. This may be done, for example, to adjust program ordering/timing specified by a received manifest (e.g., here, the manipulated second tier manifest 128) for an additional distribution 106 (e.g., here, distribution N).

As may be appreciated, the tiered manifest manipulation and distribution techniques described herein provide efficiency and flexibility in content distribution. Indeed, because the manipulated manifests specify content segments provided in the manifest inputs, many of the same content segments may be utilized at different tiers of distribution, introducing new content segments only for newly added content. Thus results in decreased encoding/decoding cycles and storage utilization. Further, as illustrated, any number of tiered manifest manipulations may be performed to suit the content distribution demands of an organization. Further, any number of manifest manipulations may be performed at a particular tier, to enable flexible distribution at a particular tier. In some embodiments, multiple first level manipulations may be performed to provide multiple first tier distributions. For example, different manipulated first tier manifests may be generated for different first tier distributions (e.g., a West Coast distribution and an East Cost distribution).

Different distribution schemes may be fulfilled via the system 100. For example, distribution of domestic, international, and/or censorship distributions of content may be facilitated by tiered manifest manipulation and distribution. In another example, a broadcast content distribution scheme providing a national content distribution along with one or more localized distributions may be provided. In some embodiments, manipulated manifests may be generated for each distribution channel and in some embodiments manipulated manifests may be generated for a group of distribution channels.

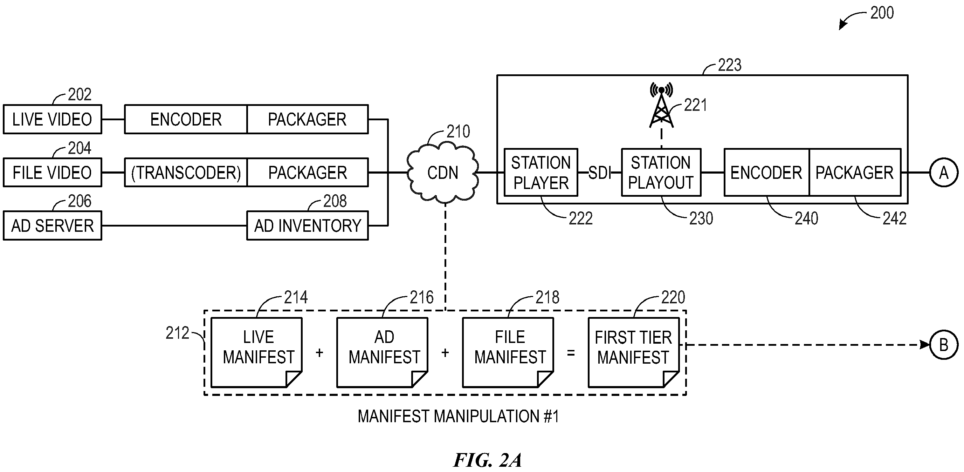

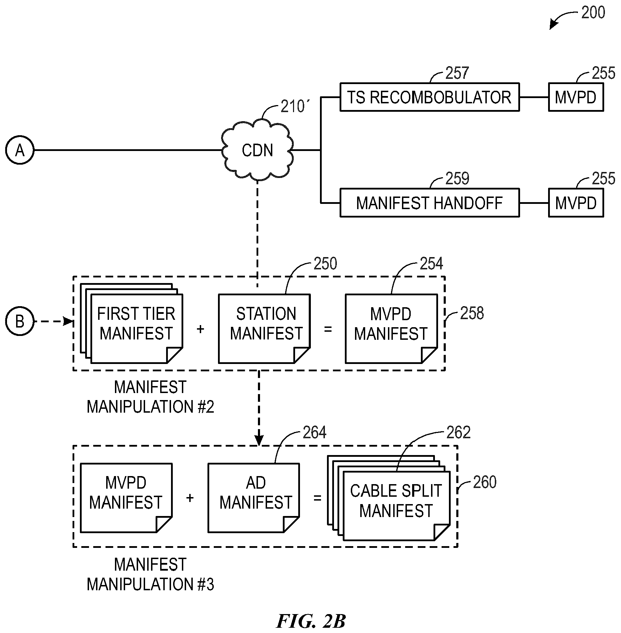

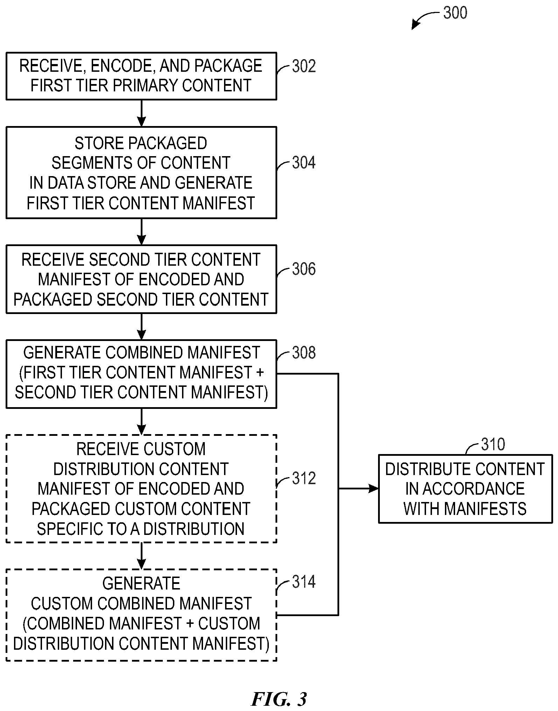

FIG. 2 is a diagram of a tiered manifest manipulation approach 200 for content distribution of a linear broadcast, in accordance with certain aspects of the current application. FIG. 3 is a flowchart, illustrating a process 300 for implementing tiered manifest distribution, in accordance with certain aspects of the current application. For clarity, these figures will be discussed together.

As illustrated in FIG. 2, the tiered manifest manipulation approach 200 mixes a primary broadcaster's live content (e.g., live video 202 (e.g., a live sporting event) with the broadcaster's file video content 204 or pre-recorded video (e.g., episodic or pre-generated content, such as a network television episode or video-on-demand) and with ad inventory 208 from an ad server 206 (e.g., FreeWheel)) to create a network broadcast experience and to recreate the existing distribution model (i.e., how the local affiliate receives network feeds today). Both the live video 202 and the file video 204 go through an encoding or transcoding process and a subsequent packaging process where the video is encoded and then chunked or broken up into smaller segments, fragments, or packages (block 302 of FIG. 3). For the live video 202, the encoding may take place at the source (e.g., the studio or live event venue (e.g., a live event processing truck at the live event venue) or at a central encoding station. Encoding at the source may avoid remote (REM) transmission to a central control location and a live master control operation, decreasing encode/decode cycles and, thus, increasing video quality presented to the viewer.

At block 304, the video chunks (e.g., segments) are then sent into a cloud storage 210, which may be a content distribution network (CDN). Each of the respective chunked content would have its associated manifest. For example, the live video 202 chunks are associated with (e.g., referred to in) a live manifest 214 and the file video 204 is associated with (e.g., referred to in) a file manifest 218. The ad inventory 208 is also associated with (e.g., referred to in) an ad manifest 216.

Once the manifests (e.g., live manifest 214, file manifest 218, and ad manifest 216) are generated, a first tier manifest manipulation process 212 takes the manifests as input and generates a first tier manifest 220. The first tier manifest manipulation process 212 creates the first tier manifest 220 by combining one or more portions of the live manifest 214, the ad manifest 216, and/or the file manifest 218 based on a schedule associated with a particular downstream entity or entities (e.g., particular stations, particular affiliates within a common time zone, etc.). The first tier manifest 220 may be considered a composite manifest specifically designed for the schedule of the downstream station (e.g., local affiliate) 223.

Different first tier manifests 220 may be generated for each of the different downstream affiliate schedules. For example, a first tier manifest 220 may be generated for affiliates in an Eastern Time Zone and a second first tier manifest 220 may be generated for affiliates in the Pacific Time Zone, based upon scheduling differences between the affiliates in different time zones. In some embodiments, when multiple affiliates within a particular time zone have different schedules, first tier manifests 220 may be generated for each of these affiliates, even though they are in the same time zone, given their differing schedules. In some embodiments, a first tier manifest 220 may be generated for each downstream affiliate, regardless of whether scheduling differences exist.

As may be appreciated, each of the first tier manifests 220 may refer to common chunks/segments stored in the cloud storage 210. In this manner, only one encoding/transcoding and packaging process is needed for each piece of content received in the system. This may significantly reduce system processing, by requiring significantly fewer encoding/decoding processes on the content chunks, which may further increase content quality/fidelity. Further, in an aspect, only the chunks needed by each first tier manifest 220 (e.g., the composite of the live manifest 214, the ad manifest 216, and the file manifest 218) may be pulled from the cloud storage 210, creating transmission efficiencies to the local affiliates and, thus, reducing bandwidth waste. Each first tier manifest 220 can be unique to each station or affiliate since different stations can have slightly different programming and/or ad payloads.

Continuing with FIG. 2, a station master control ecosystem 221 may receive and decode the first tier manifest 220 indicating the content chunks/segments stored in the cloud storage 210. A station player 222 may access content segments indicated in the first tier manifest 220 from the cloud storage 210. The first tier manifest 220 may be station 223 specific, including only the content segments to be used by the station 223. Because only the content segments indicated in the first tier manifest 220 that are needed for the station 223 are accessed from the cloud storage 210, significant bandwidth efficiencies may be observed. The station master control ecosystem may use these indicated chunks/segments for its on air content, including incorporating its own local ad insertion and local station content, to generate a station playout 230, which may be broadcast over the air (OTA) to viewers in market. The station playout 230 may involve an HTTP live streaming (HLS) to serial digital interface (SDI) decoding for (ATSC) over the air (OTA) handoff.

Because multichannel video programming distributors (MVPDs) and over-the-top (OTT) platforms are also part of the content distribution ecosystem, a need exists to provide manifest manipulated feeds to the MVPDs and OTT platforms. To solve this problem, the station playout 230 may be encoded 240 and packaged 242 locally at the station 223 during station time. Station time refers to the time specifically allocated to the station to enable the station to contribute its own station content, separate from the network content that was contributed by a network. As such, station content excludes network content associated with (e.g., indicated in) the first tier manifest 220, for example, and includes the station's locally inserted ads and/or local station origination content. After the encoding and packaging process, video chunks are generated for the station content, which is associated with (e.g., indicated in) a station manifest 250. The station manifest 250 and the chunked station content may be provided to the cloud storage 210' (e.g., a CDN), which may or may not be the same as cloud storage 210.

Next, upon receipt of the station manifest 250 (block 306), a second tier manifest manipulation 258 may be used to generate a second tier manifest 254 based on the first tier manifest 220 and the station manifest 250 (block 308). As mentioned above, the station manifest 250 does not include first-tier content. Thus, the first tier manifest 220 and the station manifest 250 do not refer to shared or common fragments or chunks. The second tier manifest 254 (also referred to as an "MVPD manifest" which may provide an indication of a linear distribution stream for MVPDs and/or an "OTT manifest" that may provide an indication of the linear distribution stream for Over the Top devices) is a replica of the over-the-air feed associated with the station (e.g., a composite of the first tier and second tier content).

The second tier manifest manipulation 258 may merge content segments of the first tier content indicated in the first tier manifest 220 with content segments of station content indicated in the station manifest 250. Scheduling of the merged content may be dictated by the first tier manifest 220, as the second tier manifest manipulation 258 may append in station content segments (e.g., affiliate-specific and/or dictated) in locations indicated, by the first tier manifest 220, as available for supplemental content (e.g., within timing gaps of the first tier manifest 220). In some embodiments, scheduling information may be received (e.g., from the station 223) in the form of the Advanced Television System Committee (ATSC) 1.0 Program and System Information Protocol (PSIP) information, which is used for generating the electronic program guides for the station 223 over the air broadcasting. Additionally and/or alternatively, external systems (e.g., Gracenote) may provide the scheduling information. Further, in some embodiments, rather than using electronic program guide information, scheduling information may be derived from timing gaps within the first tier manifest 220. In such embodiments, timing switch points from segments of the first tier manifest 220 to segments of the station manifest 250 may be assumed based upon start and stop times indicated in the first tier manifest 220.

In some embodiments, a local override process may be provided, enabling the station 223 to override presentation of content from the first tier manifest 220 with content provided in the station manifest 250. This may be used, for example, when local breaking news should interrupt previously scheduled national content. To do this, a control room interface of the station 223 may allow adjustment/manipulation of the second tier manifest 254 in certain portions that indicate content from the first tier manifest 220 to replace segment indications with segment indications of content provided in the station manifest 250. The adjustment/manipulation may switch back to previously scheduled segments indicated in the second tier manifest 254, upon the override completing (e.g., upon completion of the override content, after a certain time period, etc.). In this manner, the station 223 may override content provision from the first tier, in accordance with prescribed permissions of the station 223 with respect to the local override process.

The second tier manifest 254 may be used to distribute this linear feed to the MVPD or OTT partners 255 (block 310), either by generating a transport stream (block 257) from the second tier manifest 254 or by providing (block 259) the second tier manifest 254 to the MVPD or OTT partners 255. The second tier manifest manipulation 258 does not require the network content (e.g., the live video 202, the file video 204, or the ad inventory 208) to be re-encoded or re-transcoded but are simply accessed again by way of the cloud storage 210 by the MVPD or OTT manifest player, supporting an `encode once' approach to creating these video chunks. Thus, the current content distribution techniques using the second tier manifest 254 may result in efficient processing and transmission of content to the MVPD and/or OTT partners 255.

In some embodiments, it may be optionally desirable to generate additional customizations for particular distribution channels. For example, providing different ads for one particular distribution channel that are different from ads for other distribution channels. Accordingly, in response to receiving a second customized manifest (e.g., "ad manifest" 264 including customized ads) (block 312), a third tier manifest manipulation 260 may be used to generate a third tier manifest 262 (block 314). The third tier manifest 262 may be generated by generating a composite manifest from the second tier manifest 254 and the second customized manifest (e.g., ad manifest 264 including the customized content (e.g., ads)). This allows dynamic customized content/ad insertion for particular distribution channels (e.g., MVPD or OTT partners 255), by replacing ad chunks or fragments referred to in the second tier manifest 254 with different ad chunks or fragments contained in the ad manifest 264, providing a distribution channel split (e.g., a "cable split" feed with customized content for a cable distribution channel). A similar third tier manifest manipulation process may be performed by a streaming or OTT platform for purposes of performing dynamic ad insertion. As discussed herein, in an aspect, the first, second, and third tier manifest manipulation processes may be performed by a single entity (e.g., a network) or by separate entities. The customized "split" content may be distributed to the particular distribution channel (e.g., as indicated by block 257 and/or block 259) that it is customized for (block 310), such as by providing the third tier manifest 262 to the distribution channel and/or creating and/or providing a transport stream using the third tier manifest 262.

For example, a particular MVPD, such as a cable television distribution company, may wish to substitute new cable subscription advertisements for upgraded cable subscription advertisements when a content feed is distributed through its channel, as all of the recipients of the content feed through the cable television distribution company's channel may already be subscribers and, thus, should not receive new cable subscription advertisements. To provide this type of customization, the third tier manifest manipulation 260 may receive an ad manifest 264 that provides an indication of customized segments (e.g., upgrade cable subscription advertisement segments), which may and replace desired ad content segments (e.g., new cable subscription advertisement segments) with the customized segments. Thus, when playback proceeds via the third tier manifest 262 (e.g., a cable split manifest), the playback will include the upgrade cable subscription advertisement segments in lieu of the new cable subscription advertisement segments.

In some embodiments, dynamic content (e.g., ad) insertion may be provided at one of the tiers. In such embodiments, the manifest manipulation (e.g., the second tier manifest manipulation 258 and/or third tier manifest manipulation 260) may include inserting manifest markers (e.g., converted from Society of Cable Telecommunications Engineers (SCTE)-104 and/or SCTE-35 messages) in their respective output manifests (e.g., second tier manifest 256 and/or third tier manifest 262), signaling that content should be requested from an external content server (e.g., an ad server). In this manner, dynamic content insertion may be provided during playback.

Although the foregoing examples discusses three tiers of manifest manipulation, any number of tiers may be used as needed. A benefit of this approach is that the tiered manifest manipulation process provides a network linear transport stream feed with a local station transport stream feed that can be redistributed without the content ever needing to be re-transcoded and/or re-encoded, which avoids audio and video quality degradation that often occurs when network content is re-encoded and/or re-transcoded by the station before its provided to MVPDs and OTT platforms.

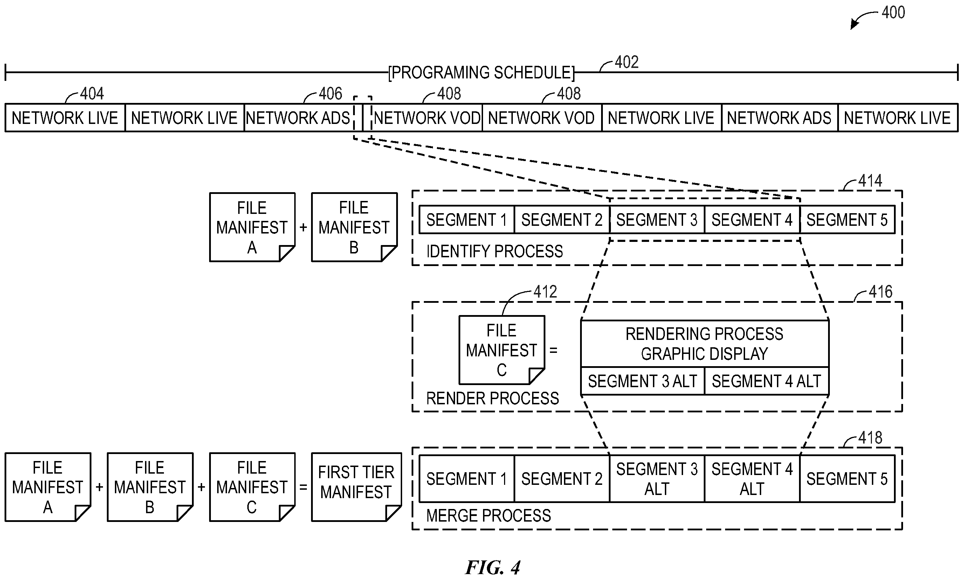

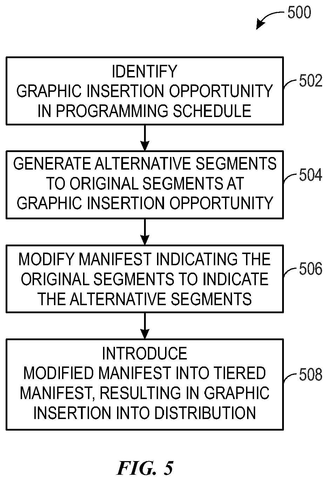

In some instances, it may be desirable to include graphical insertions (e.g., overlays) into portions of the content previously encoded and packaged in the tiered manifest manipulation. FIG. 4 illustrates a pre-rendering workflow to accommodate for scheduled network graphics inserted into such content. FIG. 5 is a flowchart, illustrating a process 500 for inserting graphics via tiered manifest distribution, in accordance with certain aspects of the current application. For clarity, these figures will be discussed together.

Referring to FIG. 4, a programming schedule 402 may act as a playlist defined by a scheduling ecosystem of various chunks or segments of content that include network live segments 404, network ad segments 406, and/or file segments 408 (e.g., video on demand (VOD) segments), etc. As illustrated in FIG. 5, the process begins with identifying a graphical insertion opportunity within the programming schedule 402. For example, in some embodiments, these opportunities may be indicated in programming schedule (e.g., in a Broadcast Exchange Format (BXF) message). The programming schedule may specify graphic type, file names, as well as insertion and removal timestamps for when the playout system should insert the graphic.

The file segments 408 may be referenced in one or more file manifests, such as File Manifest A and File Manifest B (e.g., where File Manifest A is associated with first content and File Manifest B is associated with second content). Together, File Manifests A and B may have Chunks/Segments 1 through 5 (or some other number of segments). In this example, Segments 3 and 4 may be identified (via identification process 414) as requiring a graphics overlay. For example, Segments 3 and 4 may include a graphic call to insert a graphic, such as a credit squeeze back, a lower-third bar, and/or a "coming up" promo. In particular, the promo may say that during Segments 3 and 4 insert a lower third graphic that says, "Coming up next is the Voice."

Next, as illustrated in FIG. 5, alternative segments with the inserted graphics are generated (block 504). At the rendering process 416, segments with scheduled graphics are downloaded and passed through non-linear graphics rendering and encoding, creating a new segment. This new segment may be referred to as an alternative "ALT" segment containing the desired graphics. The ALT segment is of equal length and equal characteristics to the clean segment, and otherwise a 1:1 replacement of the clean segment, except that the desired graphics are included. As mentioned above, the schedule may include graphic type, file names, as well as insertion and removal timestamps for when the playout system should insert the graphic. The new segments with graphics may be pre-rendered using this information.

In some embodiments, for live content, the ALT segments may be generated "on the fly" using real-time graphics platforms prior to encoding and packaging of live content. For file/VOD content, the ALT segments may be generated at any time prior to their provision and the ALT segment generation process may be repeated for each graphical variant to be provided (e.g., different regional and/or local graphics).

After the alternative segments are generated, the manifest is modified to refer or point to the alternative segments in lieu of their original counterpart segments (block 506). Referring to FIG. 4, Segment 3 ALT and Segment 4 ALT are alternative segments created by taking original Segments 3 and 4 and adding graphics (e.g., applying a graphics overlay). After creating the alternative segments (Segment 3 ALT and Segment 4 ALT), an alternative manifest 412, such as File Manifest C, is created and associated with the new dirty segments. During the merging process 418, File Manifests A, B, and C may then be manipulated together to swap out references to the original Segments 3 and 4 with references to the alternative segments (Segment 3 ALT and Segment 4 ALT) created in the rendering process 416. As previously mentioned, segment timing and media characteristics are unchanged so that alternative segments can replace original segments in a 1:1 swap in any downstream workflows. The merging processing 418 results in the modified manifest (e.g., here the first tier manifest 220', as the graphical insertion is applied to the first tier manifest 220)

Although FIG. 4 illustrates a workflow for graphics insertion at a manifest manipulation level, a similar effect may be accomplished at a file level. For example, instead of modifying the manifest file and replacing the filename of a previous segment within the manifest, the filename could be maintained and instead the chunk/segment itself could be modified, replacing the chunk/segment without inserted graphics with a chunk/segment that has the graphics inserted. This approach has some tradeoff considerations. For example, while this may reduce storage requirements by not storing two versions of the segments/chunks (e.g., one without inserted graphics and one with inserted graphics), such approach may be destructive to the original content segments/chunks (e.g., by overwriting them). This alternative approach would be less advantageous if the original content segments/chunks are to be used by or shared with other entities that do not require the same graphics insertion. Thus, in some embodiments, duplicating the content into an alternate chunk as described above may be preferred if the asset is provided or may be provided in other non-graphical distributions/manifests.

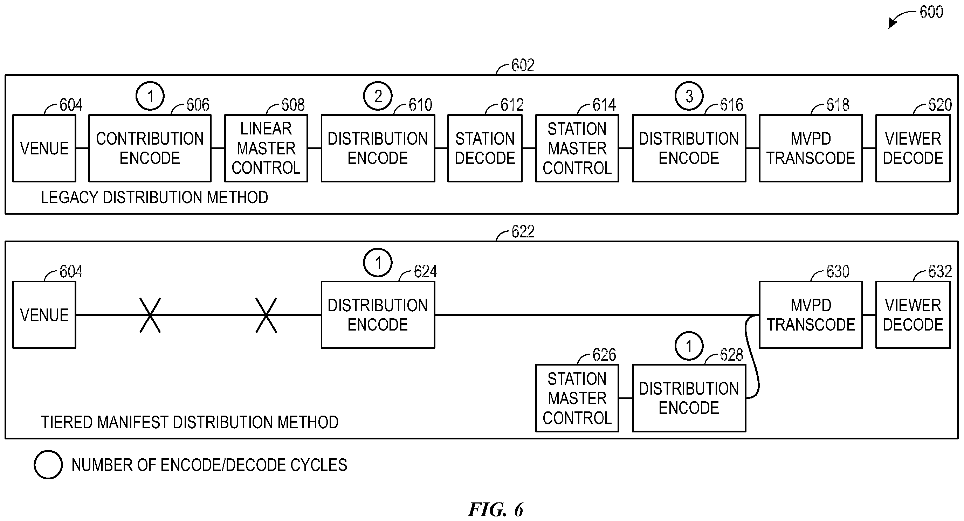

Having described the implementation details of the tiered manifest manipulation/distribution, the discussion now turns to efficiencies gleaned from these techniques. FIG. 6 is a diagram 600, illustrating encoding efficiencies and video quality optimizations enabled by tiered manifest manipulations, in accordance with certain aspects of the current application.

As illustrated in FIG. 6, under a legacy distribution method 602, source video may be provided from a venue 604. The source video may be encoded (contribution encode 606) before the source video is transmitted to a linear master control 608. The linear master control may re-encode (distribution encode 610) the encoded source video so that the video may be suitable for distribution to various stations.

Upon receiving the re-encoded video, each station may perform a station decode 612 and provide the decoded video to station master control 614 for playout. The station playout may be re-encoded (distribution encode 616) for distribution to transmitters and/or MVPDs. In this case, the station playout would also contain the network video, which at this point, has been encoded twice before being encoded a third time. The station playout may also be transcoded by the station or by the MVPD (MVPD transcode 618) to meet MVPD technical requirements. Finally, when the encoded and transcoded signal reaches an end user, the end user will decode the signal to view the video (Viewer Decode 620). The end result of this legacy distribution method 602, is that content delivered to the viewer has undergone three encode/decode cycles.

In contrast to the legacy distribution method 602, which utilizes a significant number of encodes and decodes, the tiered manifest distribution method 622 enables both encoding efficiencies and video quality optimizations. With the tiered manifest distribution method 622, source video distributed to a network may be encoded (distribution encode 624) either at the source or a production venue 604. This allows the tiered manifest distribution method 622 to avoid having a contribution encoding step, as well as a linear master control process. The station playout as determined by the station master control 626 may also be distribution encoded 628. But unlike in the legacy distribution method 602, the tiered manifest distribution method 622 does not re-encode the previously encoded source video (e.g., source video encoded via distribution encode 624) when performing the distribution encode 628 for the station playout. By avoiding multiple encodes, and reusing previously encoded content, video quality for the end user is optimized. For example, the content from each source is "single generation" meaning encoded only once, resulting in less encoder processing and, thus, higher video quality.

Once the encoded network and station fragments are provided to the MVPD, the MVPD (or the OTT platform) may transcode (MVPD Transcode 630) the fragments, if necessary. The transcoded fragments may be provided to the end user player for decoding and viewing (Viewer Decode 632). However, some MVPDs utilize fragmented video delivery to their end viewers and, thus, could elect to pass the original single generation encoded fragments all the way from original distribution encode 624 to the viewer/consumer. This type of MVPD distribution would, in practice, represent a 'direct to consumer' encode model, while participating in the complex affiliate station distribution methodology.

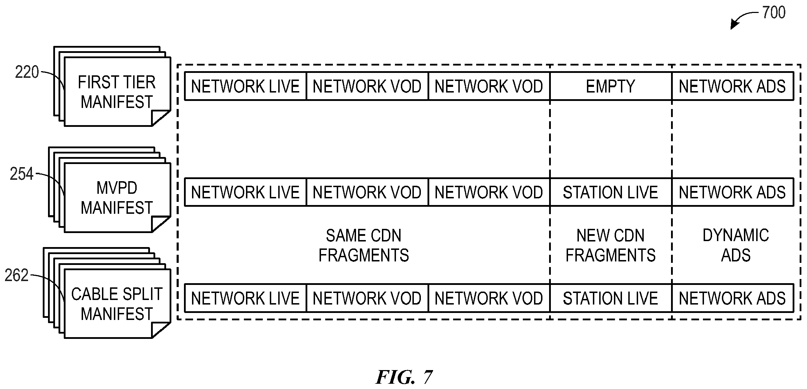

FIG. 7 is a diagram 700, illustrating storage efficiencies of the tiered manifest distribution of FIG. 1, in accordance with certain aspects of the current application. Specifically, FIG. 7 shows the first tier manifest 220, the second tier manifest 254 (e.g., an MVPD and/or OTT manifest), and the third tier manifest 262 (e.g., a Cable Split manifest), and an expanded view of the various segments that correspond to each of the composite manifests. For example, the first tier manifest 220 includes one or more network live segments, one or more network VOD segments, one or more empty (or non-network) segments, and one or more network ad segments. The empty segment may be a placeholder for local stations to insert their local content.

The second tier manifest 254 includes reference to: one or more of the identical network live segments, one or more identical file segments, one or more identical station live segments containing station-selected content, and one or more network ad segments.

The third tier manifest 262 includes reference to: one or more of the identical network live segments, one or more identical file segments, one or more identical station live segments containing station-selected content, and one or more network ad segments. For the third tier manifest 262, however, the network ad segments and/or any ad segments within the station live segments may be available for dynamic ad insertion.

As shown in FIG. 7, across the composite manifests, the network live and network VOD segments refer to the same network VOD and network live CDN fragments or chunks. As such, this technique is able to recreate a linear experience for various distribution regimes by encoding the network content (live and VOD) just once, resulting in significantly reduced encoding/decoding processing and storage requirements.

While only certain features of the present disclosure have been illustrated and described herein, many modifications and changes will occur to those skilled in the art. It is, therefore, to be understood that the appended claims are intended to cover all such modifications and changes as fall within the true spirit of the present disclosure.

## Claims

1. A computer-implemented method for tiered manifest manipulation, comprising:
receiving a first manifest associated with first content and a second manifest associated with second content;
generating a first tier manifest (110) comprising an indication of first tier segments describing a playback schedule of the first content and the second content, the first tier manifest (110) comprising a composite of the first manifest and the second manifest that indicates first segments of the first content and second segments of the second content; and
providing the first tier manifest (110) to enable generation of a second tier manifest (128), wherein the second tier manifest (128) is generated based on the first tier manifest (110) and a station manifest (250).

2. The computer-implemented method of claim 1, wherein the first tier manifest (110) indicates first tier segments of first tier encoded and packaged content and the station manifest (250) indicates segments of station-specific content without an indication of the first tier segments.

3. The computer-implemented method of claim 2, comprising:
receiving the station manifest (250);
generating the second tier manifest (128) based on the first tier manifest (110) and the received station manifest (250); and
causing provision of the first tier segments and segments of station-specific content to a multichannel video programming distributor, MVPD, an over-the-top, OTT, platform, or both, using the second tier manifest (128).

4. The computer-implemented method of claim 3, comprising:
causing the provision of the first tier segments and the station-specific content segments to the MVPD, the OTT platform , or both by:
providing the second tier manifest (128) to the MVPD, the OTT platform, or both, to instruct the MVPD, the OTT platform how to acquire the first tier segments and the station-specific content segments; or
generating and providing, to the MVPD, the OTT platform, or both, a transport stream based upon second tier manifest (128), wherein the transport stream comprises the first tier segments and the station-specific content segments.

5. The computer-implemented method of claim 3, comprising:
generating the second tier manifest (128) by inserting indications of content segments from the received station manifest (250) into empty slots of programming segments indicated by the first tier manifest (110).

6. The computer-implemented method of claim 3, comprising:
generating the station manifest (250), by:
encoding and packaging station-specific content obtained via a station playout into station-specific content segments; and
populating the station manifest (250) with an indication of the station-specific content segments and associated timings.

7. The computer-implemented method of claim 3, comprising:
receiving an ad manifest (264); and
generating a third tier manifest (262) based on the second tier manifest (128) and the received ad manifest (264), wherein the third tier manifest (262) enables dynamic ad insertion.

8. The computer-implemented method of any previous claim, wherein:
the first manifest comprises an indication of segments of the first content, the first content comprising live video content; and
the second manifest comprises an indication of segments of the second content, the second content comprising a file video.

9. The computer-implemented method of any previous claim, comprising:
generating a plurality of second tier manifests, each providing a different schedule, selection, or schedule and selection of the first segments and second segments in conjunction with associated second tier content.

10. The computer-implemented method of claim 9, wherein the plurality of second tier manifests comprise a corresponding second tier manifest (128) for each of a plurality of stations that use at least a portion of the first segments, at least a portion of the second segments, or both.

11. The computer-implemented method of any previous claim, comprising:
inserting a graphic into at least a portion of the first segments, at least a portion of the second segments, or both, by:
identifying within the first tier manifest (110), a graphical insertion opportunity;
generating alternative segments to original segments occurring within the graphical insertion opportunity, the alternative segments comprising the original segments modified to include the graphic; and
adjusting subsequent playback to include the alternative segments by:
modifying the first tier manifest (110) to indicate the alternative segments in lieu of the original segments; or
replacing the original segments with the alternative segments.

12. A tangible, non-transitory, computer-readable medium, comprising computer-readable instructions that, when executed by one or more processors of one or more computers, cause the one or more computers to:
receive a first manifest associated with first content and a second manifest associated with second content;
generate a first tier manifest (110) comprising an indication of first tier segments describing a playback schedule of the first content and the second content, the first tier manifest (110) comprising a composite of the first manifest and the second manifest that indicates first segments of the first content and second segments of the second content; and
provide the first tier manifest (110) to enable generation of a second tier manifest (128), wherein the second tier manifest (128) is generated based on the first tier manifest (110) and a station manifest (250).

13. The tangible, non-transitory, computer-readable medium of claim 12, comprising computer-readable instructions that, when executed by one or more processors of one or more computers, cause the one or more computers to:
receive a third manifest, comprising an indication of customized content for a particular distribution channel;
generate a third tier manifest (262) specific to the particular distribution channel, based on the second tier manifest (128) and the received third manifest, wherein the third tier manifest (262) enables dynamic ad insertion; and
cause provision of content associated with the third tier manifest (262) to the particular distribution channel.

14. A content distribution system (100), comprising:
a first encoder and packager configured to encode, package, and cause storage of first segments of first content, and generate a first manifest providing an indication of the first segments;
a second encoder and packager configured to encode, package, and cause storage of second segments of second content, and generate a second manifest providing an indication of the second segments;
a manifest manipulation service configured to:
generate a first tier manifest (110) comprising an indication of first tier content segments and describing a playback schedule of the first content and the second content, by combining the first manifest and the second manifest, the first tier manifest (110) indicating first segments of the first content and second segments of the second content; and
provide the first tier manifest (110) to enable generation of a second tier manifest (128), wherein the second tier manifest (128) is generated based on the first tier manifest (110) and a station manifest (250) comprising an indication of station-specific content segments.

15. The content distribution system (100) of claim 14, wherein the manifest manipulation service is configured to:
receive the station manifest (250);
generate the second tier manifest (128) by combining the first tier manifest (110) and the station manifest (250);
cause provision of the first tier segments and the station-specific content segments to a multichannel video programming distributor (MVPD), an over-the-top (OTT) platform, or both, using the second tier manifest (128), by:
providing the second tier manifest (128) to the MVPD, the OTT platform, or both, to instruct the MVPD, the OTT platform, or both, how to acquire the first tier segments and the station-specific content segments; or
generating and providing, to the MVPD, the OTT platform, or both, a transport stream based upon second tier manifest (128), wherein the transport stream comprises the first tier segments and the station-specific content segments;
generate a cable split manifest customized for a particular cable distribution channel, by:
receiving a custom ad manifest (264) comprising an indication of custom content segments to be played via the particular cable distribution channel; and
merging the custom ad manifest (264) with the second tier manifest (128); and
cause provision of the first tier segments, the station-specific content segments, and the custom content segments to the particular cable distribution channel.
